Europäisches Patentamt

(19) European Patent Office

Office européen des brevets

(11) Publication number: **0 168 154**
**A2**

## (12) EUROPEAN PATENT APPLICATION

(21) Application number: 85303842.0

(22) Date of filing: 31.05.85

(51) Int. Cl.⁴: **F 16 K 35/06**
**F 16 K 35/00**

(30) Priority: 02.06.84 GB 8414132

(43) Date of publication of application:
15.01.86 Bulletin 86/3

(84) Designated Contracting States:
AT BE CH DE FR GB IT LI LU NL SE

(71) Applicant: Ellis, Alan Elgar Herbert
14 Scott Drive Lexden
Colchester Essex(GB)

(72) Inventor: Ellis, Alan Elgar Herbert
14 Scott Drive Lexden
Colchester Essex(GB)

(74) Representative: Gillam, Francis Cyril et al,
Sanderson & Co. 97 High Street
Colchester Essex C01 1TH(GB)

(54) **Lock mechanisms.**

(57) A security lock mechanism suitable for locking the operating spindle of a ball valve comprises a drive member 10,15 adapted to be secured to the valve spindle and rotatable within a sleeve 18 fixed relative to the valve body. Two lock members 27 and 28, each having a cam lobe 29 and 30 respectively, are mounted in the drive member, the lobes being engageable with respective recesses 34 and 35 on appropriate positioning of the drive member. An individual key 34 is associated with each lock member, which key is held captive within the lock mechanism other than when the cam of the associated drive member is engaged with its recess in the sleeve. Possession of one of the two keys guarantees the valve is set to one of its two extreme settings, as appropriate for that key.

FIG.2

Croydon Printing Company Ltd

## LOCK MECHANISMS

This invention relates to a lock mechanism for a rotatable stub projecting from a machine element, such as for the operating stub shaft of a fluid-flow control valve. Though the invention is not exclusively applicable to lock mechanisms for valves, it will nevertheless be described particularly with reference to this application.

In industrial plants, pipeline installations and so on, it is not infrequently necessary for the operation of fluid flow control valves to be strictly regulated, to ensure the safety of the plant. For example, it may be most important that the state of one valve is not changed (that is, opened, if closed or closed, if open) unless some other valve is in a predetermined state. In the past, this has been achieved by a supervisor instructing an operator to set a particular valve as appropriate, and then to lock that valve in its set state, for example by means of a padlock and chain. The production of the key to the padlock has been taken to indicate that the valve has been appropriately set - but of course there is no guarantee that this is so.

In an attempt to overcome the foregoing disadvantage and so to increase safety, there have been various proposals for valve lock mechanisms having a key which can be removed from the mechanism only when the valve has been set to a particular state: possession of the key will then more reliably indicate the valve is at the required setting. Experience has however shown that these mechanisms are easy to defeat by operators, or are too delicate for use on a large-scale installation. As a result, the expected reliability in operation has not been achieved.

This invention aims at improving lock mechanisms of the kind discussed above and though the mechanism of this invention may be used in conjunction with other rotatable components requiring locking at a given angular setting, it is especially advantageous for use with a ball valve, the drive shaft of which needs a 90° turn to take the valve between its fully opened and fully closed states.

In accordance with this invention, a lock mechanism for a rotatable stub projecting from a machine element, and including a drive member for the stub, and a sleeve surrounding the drive member which sleeve is held against rotation with respect to the machine element, is characterised by the provision of a lock member rotatably mounted on the drive member and having a lock element operable by the lock member and engageable with a recess provided in the sleeve on positioning of the lock member at a defined angular setting of the drive member with respect to the sleeve, and a key for turning the lock member which key is engageable with and releasable from the lock member at a defined angular position thereof with respect to the drive member.

When the lock mechanism of this invention is used with a ball valve, the machine element comprises the body of the ball valve, and the rotatable stub comprises the drive stub shaft for the ball itself. The drive member has to be drivingly coupled to the stub shaft and the sleeve must be mounted such that it is held against rotation with respect to the body of the valve. The sleeve thus may be mounted either directly on the body of the valve or more preferably is mounted on the drive member to permit relative rotation therebetween, the sleeve engaging the body of the valve in such a way that the sleeve may not rotate with respect thereto.

In a particularly preferred arrangement of this invention arranged for use with a ball valve as just described, there is provided a drive boss which is adapted for mounting on the stub shaft of the ball valve as a direct substitute for the normal operating handle of the valve: the ball valve itself thus needs no modification to have the drive boss attached thereto. The drive member is engaged co-axially with the drive boss such that rotation may be imparted from the drive member to the drive boss, the two components then being secured together against axial separation, and a sleeve fitting around the two components and being appropriately configured to abut suitable parts of the ball valve body, such that the sleeve may not rotate with respect to the body. Most preferably, a bore is provided in the drive member to receive the drive boss, there being at least one radially movable detent (but preferably two, diametrically opposed) provided in the drive member and engagable with a recess in the drive boss to prevent axial separation of the drive member and drive boss, the sleeve fitting over the detent to prevent radially outward movement thereof out of the recess, until the sleeve has been slid axially away from its assembled position. Security means may be provided to prevent the sleeve being slid axially, such that the lock mechanism may be released from the ball valve only by authorised personnel possessing the appropriate device to release the security means.

When the lock mechanism is used with a ball valve, the defined angular position of the drive member at which the lock member may be turned to engage its lock element with a recess in the sleeve should be when the valve is at one of its two extreme settings, and the defined angular position of the lock member at which its associated key may be removed therefrom or replaced thereon should be when the lock element of that lock member is engaged with its recess in the sleeve. In this way, possession of the key will positively indicate the setting of the valve at the required position.

The lock element could comprise a pin or like element slidable in the drive member to engage the recess in the sleeve under the action of a cam provided on the lock member, but it is preferred for the lock element to comprise a lobed cam mounted on or provided as a part of the lock member, the lobe of the cam being directly engageable in the recess upon turning of the lock member.

With this preferred arrangement of this invention, it will be appreciated that the recess in the sleeve must be positioned to permit the cam to be turned to engage its lobe in the recess only when the drive member has been turned to set the valve either fully opened, or fully closed. This lock mechanism may however be modified to incorporate a second lock member of generally similar configuration to the first lock member, the sleeve having a second recess in which the lobe of the cam of the second lock member may be engaged. Appropriate positioning of the two recesses then permits the drive member to be locked at either one of two settings, defined by the positions of the recesses in the sleeve. Furthermore, by appropriately marking the two keys, possession of one of the keys will positively guarantee that the valve has been locked at the setting indicated by the marking on that key - for it will be appreciated that only one key may be released from the lock mechanism at a time, as the absence of a recess to receive one of the cam lobes inhibits turning of the associated lock member and so ensures the associated key remains trapped within the mechanism.

It is most preferred for each key to be of a generally cylindrical form and to be receivable in a bore provided in the drive member, which bore is coaxial with the lock member with which the key is to be engaged. Then, by providing firstly an annular groove in the bore and an axially-extending keyway communicating between the groove and the end of the bore, and secondly a radially-projecting peg on the key which peg is receivable in the annular groove, the key will be held captive within the bore and so drivably engaged with the lock member other than when the key peg is aligned with the axially-extending keyway. At all other angular settings of the key (and hence of the lock member) the key will be held captive by virtue of its peg being received in the annular groove.

Most advantageously, the or each lock member is provided with a cylindrical head having a plurality (and preferably three) radially directed projections at pre-determined angular intervals therearound, the key having a cylindrical socket in which the head may be received, the socket being provided with axially-extending slots at the same angular intervals as the projections whereby the projections on the head respectively fit into the slots of the key, as the key is engaged with the lock member. In this way, drive may be imparted to the lock member from a key - but only by the correct key specifically adapted to fit the head of that lock member.

The drive member preferably is provided with means permitting the rotation thereof to actuate the valve when both keys are engaged with the lock members and the lock members have been turned to release the lock elements from the recesses in the sleeve. Such means may comprise one or more radially projecting tommy bars extending beyond the outer cylindrical surface of the drive member - and by providing the or each tommy bar at an appropriate axial location on the drive member, the bar may serve to restrain relative axial separation of the drive member and sleeve. In the above-mentioned embodiment of this invention utilising a member engaged with a drive boss, the tommy-bar may thus comprise a part of the security fitting preventing unauthorised removal of the lock mechanism from a ball valve.

By way of example only, one specific embodiment of this invention will now be described in detail, reference being made to the accompanying drawings, in which:-

Figure 1 is an explanatory drawing of the embodiment of lock mechanism constructed in accordance with this invention and suitable for use with a ball valve, parts of the mechanism having been cut away for clarity and other parts having been separated from the mechanism;

Figure 2 is a vertical cross-sectional view through the lock mechanism, when fully assembled;

Figure 3 is a cross-sectional view of the lock mechanism, the section line III-III being shown on Figure 2;

Figure 4 is a cross-sectional view taken on the same plane as that of Figure 3, but in the opposite direction; and

Figures 5A, 5B and 5C are three diagrammatic views showing the operation of the lock mechanism.

The lock mechanism illustrated in the drawings is specifically intended for use with a ball valve the operating stub shaft of which requires a 90° turn to take the valve between its two extreme settings of fully open and fully closed. The lock mechanism is intended for fitting to a completely unmodified ball valve, such that the conventional handle thereof may be substituted by the lock mechanism, or vice versa, at will.

Though not shown in the drawings, the ball valve has an operating stub shaft provided with a pair of flats and external threads to permit the attachment thereto of an operating handle. The lock mechanism as a whole is fitted to the ball valve by means of that operating stub shaft and is provided with a drive boss 10 having a lower flange 11 and a drive hole 12 in which the stub shaft of the ball valve is received. When the drive boss 10 has been fitted on the stub shaft, a nut 13 is threaded on the shaft and is tightened down, securely to clamp the drive boss 10 in the required position. The flange 11 has a leg 14 projecting therefrom, which leg is engageable with abutments (not shown) provided on the ball valve body, so as to limit the angular movement of the drive boss 10 to 90°, the valve being set at the fully opened and fully closed positions at the extremes of movement defined by the leg 14.

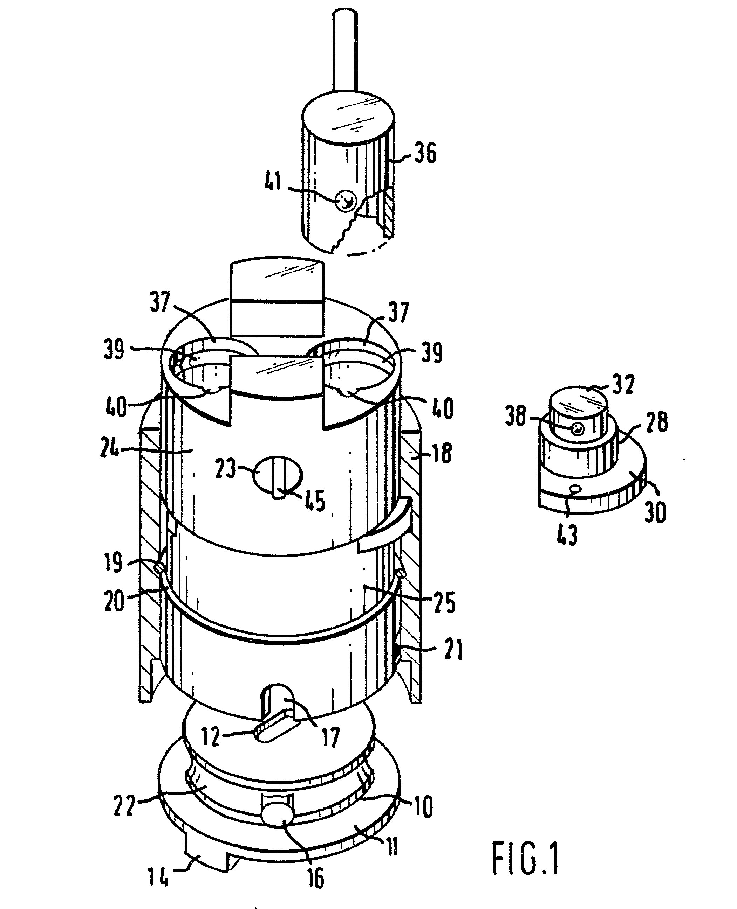

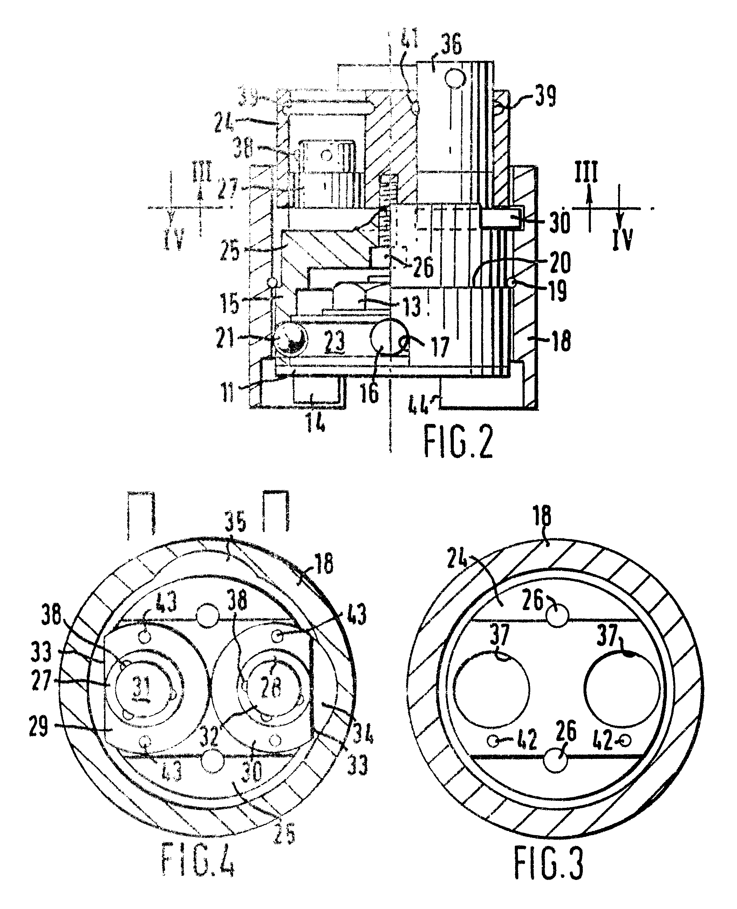

A drive member 15 has a circular bore in which the drive boss 10 is received, the drive boss 10 having a pair of radial fingers 16 which are received in U-shaped slots 17 in the drive member 15, whereby rotational drive may be imparted from the drive member to the drive boss. A sleeve 18 surrounds the drive member 15, a circlip 19 being fitted in an annular groove 20 in the sleeve 18 and engageable with a shoulder 20 on the drive member 15, to limit downward (in Figures 1 and 2) movement of the sleeve 18. Two balls 21 are located in diametrically opposed bores in the wall of the drive member 15 in the region of the drive boss 10, which balls are partially received in the drive member 15 and partially in a channel 22 formed around the drive boss 10. The balls are maintained in this position (as illustrated in Figure 2) by the sleeve 18, when lowered such that the circlip 19 engages the shoulder 20 on the drive member 15, and so prevents axial separation of the drive member 15 and drive boss 10. An operating lever (not shown) is fitted into a diametral bore 23 in the drive member 15, and when so positioned restrains upward movement of the sleeve 18; only when that operating lever has been removed may the sleeve 18 be lifted clear of the balls 21, so freeing the balls 21 to move radially outwards, after which the drive member 15 may be lifted clear of the drive boss 10.

The drive member 15 is in two parts, the upper part 24 of which is secured to the lower part 25 of which by means of two socket-headed screws 26. Rotatably mounted in the upper part 24 are two lock members 27 and 28, each having a cam 29 and 30 respectively and a drive head 31 and 32 respectively. Each cam 29 and 30 is defined by a part-circular disc having a cordal flat 33 and is so dimensioned that when the cams are positioned as illustrated in Figure 3, the drive member may turn within the sleeve 18. The internal surface of the sleeve is however provided with two arcuate recesses 34 and 35, in which the cams 29 and 30 may respectively be received, on appropriate positioning of the drive member 15 followed by turning of one of the the lock members 27 and 28, as appropriate.

Rotation of the two lock members 27 and 28 is performed by means of associated similar keys, only one of which is shown in the drawings. This key 36 is of cylindrical form, with an outer diameter able to fit in a bore 37 provided in the drive member 15, and an inner diameter able to receive the head 32 (or 31) of the associated lock member. The head of each lock member is however provided with at least two but preferably three radial projections 38 disposed at some known, preset disposition, and the inner cylindrical surface of each key is provided with similarly-coded slots to receive the projections, in order to permit the key fully to be engaged with the head of the lock member and to permit drive to be imparted thereto. Of course, only a key having the appropriately-positioned recesses can be engaged with the lock member head, and a different key may therefore be needed for each of the two lock members.

Each bore 37 in the drive member 15 has an annular groove 39 adjacent the end of the bore and an axially-extending keyway 40 communicating between the end of the bore and the groove 39; each key also has on its outer cylindrical surface a peg 41 which is received in the groove 39 when the key is fully engaged with the head of the associated lock member. The key may however be engaged with the lock member and released therefrom only when the peg 41 is aligned with the keyway 40; at all other angular positions of the lock member the key is held captive within the drive member by virtue of the peg 41 received in the groove 39.

In order to resist movement of a lock member other than when the correct key is engaged therewith and is deliberately turned, two spring-loaded balls 42 (Figure 3) are mounted in the upper part 24 of the drive member 15, one for each lock member so that the ball engages the upper face of the associated cam. At the two 'normal' positions of the lock member (i.e. when the key can be removed therefrom, and a second position at 180° with respect thereto), the cam is provided with dimples 43 which are engaged by the associated spring-loaded ball thus to resist rotation of the lock member.

As shown in Figure 2, the skirt of the sleeve 18 has cut away portions 44 which are adapted to fit over projecting parts of the ball valve with which the lock mechanism is to be used thereby to restrain rotation of the sleeve. The skirt of the sleeve must thus especially be machined for a given design of ball valve, in order that the sleeve 18 will not rotate with respect to the valve body.

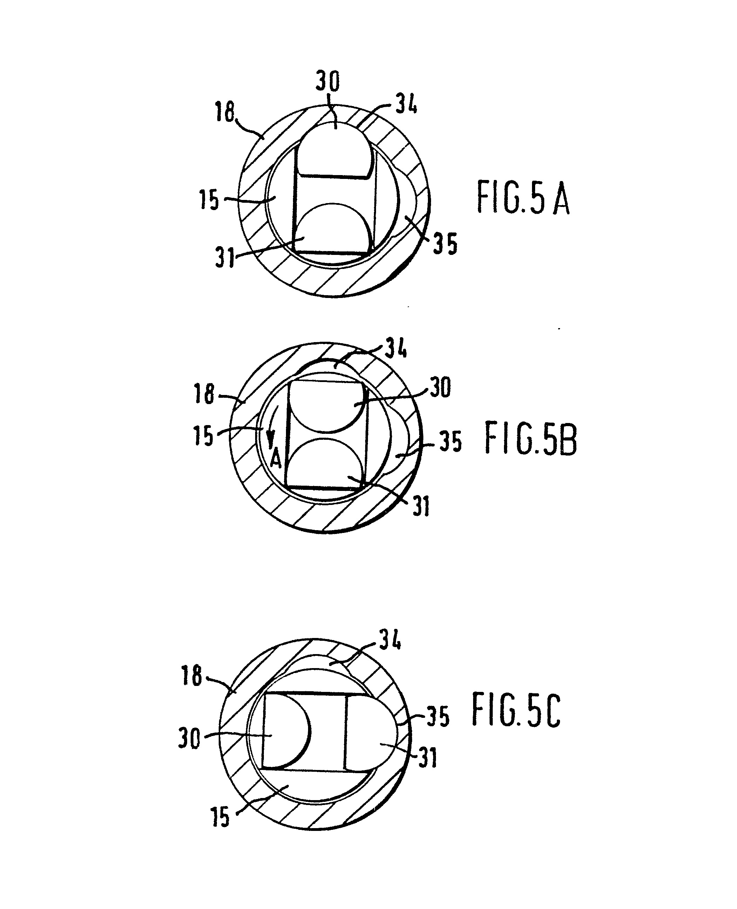

It will be appreciated that the configuration of the lock mechanism is such that a key may be released from its lock member only when the cam thereof has been engaged in an associated recess in the sleeve 18, so locking the drive member against rotation. For example, referring to Figure 5A, the drive member 15 is locked against rotation by cam 30 being engaged in recess 34 in the sleeve 18, and the associated key may be removed from that lock member.  On the other hand, cam 31 cannot be turned and its key is therefore held captive; the valve is thus locked in one extreme setting and possession of the key will adequately prove this.  To turn the valve to its other extreme setting, the removed key must be engaged with the drive member associated with cam 30, and that cam turned such that it is positioned as shown in Figure 5B.  Both keys are then held captive within the lock mechanism, but the drive member may be turned in the direction indicated by arrow A, so operating the valve, until cam 31 is aligned with recess 35.  Now, cam 31 may be turned again to lock the drive member against rotation, as shown in Figure 5C, and the key associated with cam 31 may then be released from the lock mechanism.  Possession of this key indicates that the valve is locked in its other extreme setting - and of course, at this setting the key associated with cam 30 cannot be released from the mechanism, for that cam cannot be turned.

Security may be enhanced by attaching the operating lever into the bore 23 by way of a security screw-threaded fitting engaged with the operating lever and releasable only by means of a special tool.  To assist the prevention of the unauthorised removal of the lever, the bore 23 may be provided with a keyway 45, as shown, whereby the lever cannot be rotated to free the lever from the threaded fitting: instead, an appropriate tool must be used, properly engaged with the fitting.

## CLAIMS

1. A lock mechanism for a rotatable stub projecting from a machine element, the lock mechanism including a drive member for the stub, a sleeve surrounding the drive member and held against rotation with respect to the machine element, and locking means arranged when operative to prevent rotation of the drive member (15), characterised in that the locking means comprises a lock member (27) rotatably mounted on the drive member (15) and having a lock element (29) operable by the lock member and engageable with a recess (35) provided in the sleeve (18) on positioning of the lock member at a defined angular setting of the drive member (15) with respect to the sleeve (18), and a key (36) for turning the lock member (27) which key is engageable with and releasable from the lock member (27) at a defined angular position thereof with respect to the drive member (15).

2. A lock mechanism according to claim 1 and adapted for use with a fluid-flow control valve, the machine element and rotatable stub thus comprising the valve body and valve spindle respectively, which lock mechanism is further characterised in that the lock mechanism is mounted on the valve solely by means of the interconnection thereof with the valve spindle, the sleeve (18) engaging the body of the valve in such a way that the sleeve (18) may not rotate with respect thereto.

3. A lock mechanism according to claim 2, characterised in that the lock mechanism includes a drive boss (10) which is adapted for mounting on the valve spindle as a direct substitute for the normal valve operating handle, the drive member (15) being engaged co-axially with the drive boss (10) such that rotation may be imparted from the drive member to the drive boss, but the drive member

- 13 -

0168154

and drive boss being secured together against axial separation.

4. A lock mechanism according to claim 3, characterised in that a bore is provided in the drive member (15) to receive the drive boss (10), there being at least one radially movable detent (21), but preferably two diametrically-opposed detents, provided in the drive member (15) and engageable with a recess (23) in the drive boss (10) to prevent axial separation of the drive member and drive boss.

5. A lock mechanism according to claim 4, further characterised in that the sleeve (18) fits over the detent (21) to prevent radially outward movement thereof out of the recess (23), unless the sleeve (18) has been slid axially away from its assembled position, security means preferably being provided to prevent the sleeve being slid axially.

6. A lock mechanism according to any of claims 2 to 5, characterised in that the defined angular position of the drive member (15) at which the lock member (27) may be turned to engage its lock element (29) with a recess (35) in the sleeve (18) should be when the valve is set at one of its two extreme settings, and the defined angular position of the lock member (27) at which its associated key (36) may be removed therefrom or replaced thereon should be when the lock element (29) of that lock member (27) is engaged with its recess (35) in the sleeve.

7. A lock mechanism according to any of the preceding claims, characterised in that the lock element (29) comprises a lobed can mounted on or provided as a part of the lock member (27), the lobe of the cam being directly engageable in the recess (34) upon turning of the lock member (27).

8. A lock mechanism according to any of the preceding claims, characterised in that there is provided a second

- 14 -

0168154

lock member (28) of generally similar configuration to the first lock member (27), the sleeve (18) having a second recess (34) in which the lock element (30) of the second lock member (28) may be engaged, there being a second key adapted for use with the second lock member in a manner similar to that of the first lock member.

9. A lock mechanism according to any of the preceding claims, characterised in that the or each key (36) is of a generally cylindrical form and is receivable in a bore provided in the drive member (15), which bore is coaxial with the associated lock member (27 or 28), and there is preferably firstly an annular groove (39) in the bore and an axially-extending keyway (40) communicating between the groove (39) and the end of the bore, and secondly a radially-projecting peg (41) on the key (36) which peg (41) is receivable in the annular groove (39), whereby the key is held captive within the bore and so drivably engaged with the lock member (27 or 28) other than when the key peg (41) is aligned with the axially-extending keyway (40).

10. A lock mechanism according to any of the preceding claims, characterised in that the or each lock member (27 or 28) is provided with a cylindrical head (32) having a plurality and preferably three radially directed projections (38) at pre-determined angular intervals therearound, the key (36) having a cylindrical socket in which the head (32) may be received, the socket being provided with axially-extending slots at the same angular intervals as the projections (38) whereby the projections on the head respectively fit into the slots of the key, as the key is engaged with the lock member.

11. A lock mechanism according to claim 8, characterised in that the drive member (15) is provided with means permitting the rotation thereof when both keys (36) are engaged with the respective lock members (27 and 28) and the lock members have been turned to release the lock elements (29 and 30) from the recesses (34 and 35) in the sleeve (18), said means comprising at least one radially projecting tommy bar extending beyond the outer cylindrical surface of the drive member which tommy bar preferably serves to restrain relative axial separation of the drive member (15) and sleeve (18).

FIG.1

FIG.2

FIG.4

FIG.3

0168154

FIG. 5 A

FIG. 5B

FIG. 5C